Europäisches Patentamt

European Patent Office

Office européen des brevets

(19)

(11) Numéro de publication: **0 267 850**
**A2**

## (12) DEMANDE DE BREVET EUROPEEN

(21) Numéro de dépôt: 87402538.0

(22) Date de dépôt: 10.11.87

(51) Int. Cl.⁴: **G 01 S 17/02**
G 01 S 7/48, C 03 B 35/16

(30) Priorité: 12.11.86 DE 3638659

(43) Date de publication de la demande:
18.05.88 Bulletin 88/20

(84) Etats contractants désignés:
AT BE CH DE ES FR GB IT LI LU NL SE

(71) Demandeur: **SAINT-GOBAIN VITRAGE**
**Les Miroirs 18, avenue d'Alsace**
**F-92400 Courbevoie (FR)**

(84) Etats contractants désignés:
BE CH ES FR GB IT LI LU NL SE AT

(71) Demandeur: **VEGLA Vereinigte Glaswerke GmbH**
**Viktoriaallee 3-5**
**D-5100 Aachen (DE)**

(84) Etats contractants désignés: **DE**

(72) Inventeur: **Nowoczyn, Hans Werner, Dr.**
**Hofenbornstrasse 56**
**D-5100 Aachen (DE)**

**Friedrich, Heinz-Dieter**
**A. D. Sandoruben 7**
**D-5190 Stolberg (DE)**

**Mucha, Horst**
**Severinstrasse 22**
**D-5100 Aachen (DE)**

**Taubert, Eberhard**
**Strasse Feld 30**
**D-5120 Herzogenrath (DE)**

(74) Mandataire: **Leconte, Jean-Gérard et al**
**SAINT-GOBAIN VITRAGE 39, Quai Lucien Lefranc**
**F-93300 AUBERVILLIERS (FR)**

(54) Détection d'une feuille de verre chauffée à la température de déformation.

(57) Pour la détection sans contact d'une feuille de verre chauffée à la température de déformation pendant son transport à travers une installation de four, on utilise un barrage lumineux fonctionnant en réflexion dont le module photoélectrique (10) est disposé en dehors de la zone à haute température à côté du four (1). La tête de mesure (9) est disposée au voisinage immédiat du plan de transport des feuilles de verre et est connectée au module photoélectrique (10) par l'intermédiaire d'une optique sur fibres (13) comprenant un conducteur optique pour la lumière provenant du module (10) et un conducteur optique pour la lumière réfléchie par la feuille de verre.

EP 0 267 850 A2

**Description**

## DETECTION D'UNE FEUILLE DE VERRE CHAUFFEE A LA TEMPERATURE DE DEFORMATION

La présente invention concerne la détection sans contact, à l'aide d'un barrage photoélectrique des bords antérieurs et/ou postérieurs de feuilles de verre chauffées à la température de déformation, pendant leur transport à l'intérieur d'une installation de fabrication de vitrages d'automobiles bombés et/ou trempés.

Dans des installations automatiques de bombage et/ou de trempe de feuilles de verre, notamment pour l'obtention de vitrages d'automobiles, il est fréquemment nécessaire de repérer l'instant du passage du bord antérieur et/ou postérieur des feuilles de verre en des points donnés du four et de la cellule de bombage, par exemple pour commander le mécanisme d'entraînement de la bande transporteuse ou le déroulement d'opérations de traitement ultérieures.

Comme les feuilles de verre ont dépassé leur température de ramollissement dans la dernière section du four de réchauffage ou immédiatement après la sortie de ce four, des détecteurs mécaniques usuels entraînant des contacts avec le verre ne peuvent pas être utilisés car la feuille de verre pourrait être endommagée notamment du point de vue de la qualité optique. De ce fait, on a généralement recours à des méthodes de mesure photoélectriques.

Il est connu de la publication de brevet FR-2 275 413, de prévoir des barrages photoélectriques fonctionnant en transmission entre un four traversant et un poste de bombage par pressage immédiatement adjacent, l'émetteur et le récepteur de lumière étant disposés de part et d'autre de la feuille de verre.

Comme les feuilles de verre accusent une température d'environ 650° C, ces dispositifs sont montés à distance de la feuille de verre pour éviter leur trop grand échauffement par le verre chaud. En conséquence, émetteurs et récepteurs de lumière sont éloignés, ce qui rend difficile leur ajustement précis et conduit en outre à une précision de mesure qui laisse à désirer.

L'invention a pour but un procédé de détection de la présence des bords antérieur et/ou postérieur d'une feuille de verre en mouvement réchauffée à la température de bombage ou de trempe ; procédé qui opère avec une précision élevée et de plus, puisse être appliqué sans problème même à proximité immédiate des feuilles de verre chaudes sans nuire à la précision de la mesure.

Dans ce but la détection est effectuée selon l'invention au moyen d'un barrage lumineux fonctionnant en réflexion dont les éléments photoélectriques, c'est à dire l'émetteur et le récepteur de rayons lumineux, sont disposés en dehors de la zone à haute température, les signaux lumineux émis et réfléchis étant guidés par une optique résistant à la chaleur faite de fibres de verre, depuis l'émetteur à l'endroit de mesure et depuis l'endroit de mesure au récepteur, les faces de sortie et d'entrée de lumière de la tête de mesure de l'optique sur fibres étant disposées au voisinage immédiat du plan de transport des feuilles de verre.

Conformément à l'invention, la précision de mesure est élevée car les faces de sortie et d'entrée de lumière de l'optique sur fibres sont disposées à proximité immédiate de la surface des feuilles de verre. On obtient ainsi en particulier des signaux utiles de grande intensité, de sorte que la sensibilité aux perturbations est aussi particulièrement faible.

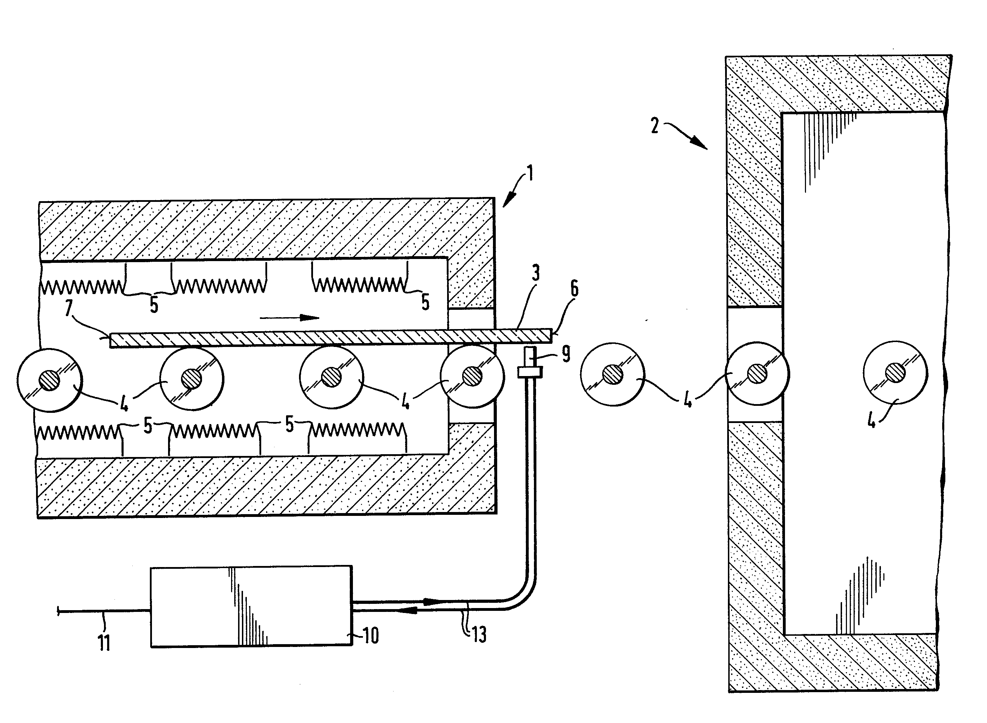

L'invention sera expliquée ci-après plus en détail avec référence au dessin annexé qui représente une vue en coupe longitudinale d'une installation de bombage pour des feuilles de verre.

L'installation de bombage comprend un four de réchauffage 1 et une cellule de bombage 2 en aval de ce four de réchauffage 1. Les feuilles de verre 3 sont transportées à travers l'installation dans une position horizontale sur un convoyeur constitué de rouleaux moteurs 4. Les feuilles de verre 3 sont chauffées à la température de bombage à l'aide de dispositifs de chauffage par rayonnement 5 puis sont bombées dans la cellule 2 selon la forme souhaitée. Le bombage des feuilles de verre 3 s'effectue de préférence suivant un procédé discontinu. Les ou tils de bombage sont installés à l'intérieur de la cellule 2 et rendent nécessaire un positionnement très précis de la feuille de verre 3 à l'intérieur de la cellule 2.

Pour ce positionnement, on détecte par des moyens optiques le bord antérieur 6 de la feuille de verre 3 (et/ou éventuellement le bord postérieur 7) ; les signaux optiques enregistrés servent pour la commande du mécanisme d'entraînement des rouleaux du convoyeur 4 qui sont freinés puis immobilisés au moment où la feuille de verre a atteint exactement la position exigée. De cette façon on évite avantageusement d'opérer avec des butées mécaniques qui agiraient sur les bords de la feuille ramollie et pourraient produite des déformations optiques du verre.

A la sortie du four de réchauffage 1, ou 1e cas échéant en un autre endroit sur le trajet de la feuille de verre réchauffée avant qu'elle ait atteint sa position finale à l'intérieur du four de bombage 2 ou à son arrivée dans cette position, on a disposé un dispositif de détection par la lumière dont la tête de mesure 9 est placée au voisinage immédiat du plan de transport des feuille de verre.

Ce dispositif photoélectrique fonctionnant en réflexion comporte un module 10 qui comprend un émetteur et un récepteur de rayons lumineux, ainsi qu'un circuit d'évaluation et de traitement des signaux lumineux reçus. Le module photoélectrique 10 est disposé à l'extérieur du four 1 ou de la cellule de bombage 2, dans une zone dans laquelle règne la température ambiante normale. A partir du module 10, une ligne de commande 11 mène au mécanisme d'entraînement des rouleaux transporteurs ici non représenté.

La tête de mesure 9 est, par exemple, disposée à une courte distance en-dessous du plan de transport formé par les rouleaux transporteurs 4, entre deux rouleaux transporteurs 4. La tête de mesure 9 fixe la zone d'extrémité d'une optique sur fibres 13. L'optique sur fibres de verre 13 comporte deux conducteurs de lumière en fibres de verre. Les faisceaux lumineux de l'émetteur de rayons lumineux parviennent par une conducteur optique à la tête de mesure 9 où ils sont émis verticalement vers le haut. La fraction de la lumière émise réfléchie par la surface de la feuille de verre 3 en direction de la tête de mesure 9 est reçue par le second conducteur optique qui se termine dans la tête de mesure et est amenée au récepteur de rayons lumineux disposé dans le module photoélectrique 10. Les fibres de verre formant l'optique sur fibres 13 sont faites d'une composition de verre qui résiste sans altération aux températures qui règnent au voisinage de la feuille de verre 3, températures qui peuvent aller jusqu'à 700°C. Les fibres de verre de l'optique sur fibres sont encapsulées dans la tête de mesure 9 par des matières qui résistent également aux dites températures élevées sans que le fonctionnement de la tête de mesure en soit défavorablement influencé.

**Revendications**

1. Procédé de détection sans contact des bords antérieur et/ou postérieur de feuilles de verre chauffées à la température de déformation, pendant leur transport à l'intérieur d'une installation de fabrication de vitrages d'automobiles bombés et/ou trempés, à l'aide d'un barrage lumineux caractérisé en ce qu'on utilise un barrage lumineux à réflexion dont les éléments photoélectriques, c'est à dire l'émetteur et le récepteur de rayons lumineux sont disposés en dehors de la zone à haute température et en ce que les signaux lumineux émis et réfléchis sont guidés, au moyen d'une optique sur fibres résistant à la chaleur, depuis l'émetteur de rayons lumineux à l'endroit de mesure et depuis l'endroit de mesure au récepteur de rayons lumineux, et que les faces de sortie de lumière et d'entrée de lumière de la tête de mesure de l'optique sur fibres sont disposées au voisinage immédiat du plan de transport des feuilles de verre.

2. Dispositif pour la mise en oeuvre du procédé selon la revendication 1, comportant un four de réchauffage traversant (1) et un four de bombage (2), une unité d'entraînement assurant la rotation des rouleaux de transport (4), un barrage lumineux fonctionnant en réflexion constatant la présence du bord antérieur et/ou du bord postérieur (6, 7) de la feuille de verre (3) dans la zone de la voie de transport de la feuille de verre chaude, et une unité de commande activée par le module photoélectrique (10) et destinée à l'unité d'entraînement des rouleaux transporteurs (4), caractérisé en ce que ce module photoélectrique (10) est installé en dehors de la zone à haute température à côté du four (1, 2), et que la tête de mesure (9) résistant à la chaleur, disposée au voisinage immédiat du plan de transport des feuilles de verre, est connectée par l'intermédiaire d'une optique sur fibres de verre (13) au module photoélectrique (10).

0267850